(19)

Europäisches
Patentamt
European
Patent Office
Office européen
des brevets

(11) **EP 2 296 395 A1**

(12) **EUROPEAN PATENT APPLICATION**

(43) Date of publication:
**16.03.2011 Bulletin 2011/11**

(51) Int Cl.:
*H04W 16/18* (2009.01)

(21) Application number: **09169830.8**

(22) Date of filing: **09.09.2009**

| | |
|---|---|
| (84) Designated Contracting States:<br>**AT BE BG CH CY CZ DE DK EE ES FI FR GB GR<br>HR HU IE IS IT LI LT LU LV MC MK MT NL NO PL<br>PT RO SE SI SK SM TR**<br>Designated Extension States:<br>**AL BA RS** | (72) Inventors:<br>• **Alpcan, Tansu**<br>  **10625 Berlin (DE)**<br>• **Vidales, Pablo**<br>  **10437 Berlin (DE)** |
| (71) Applicants:<br>• **Deutsche Telekom AG**<br>  **53113 Bonn (DE)**<br>• **Technische Universität Berlin**<br>  **10623 Berlin (DE)** | (74) Representative: **Heunemann, Dieter**<br>  **Vossius & Partner**<br>  **Siebertstrasse 4**<br>  **81675 München (DE)** |

(54) **System and method to derive deployment strategies for metropolitan wireless networks using game theory**

(57)    This invention relates to a game theoretic system, method and computer program for recommending a deployment strategy for deploying a wireless network. The network comprises a plurality of broadband connection or access point devices shared among users of the wireless network and a set of deployment locations, wherein each deployment location can be served by a corresponding subset of the broadband connection or access point devices to provide user access to the respective wireless network. The deployment strategy is obtained by solving a game theoretic problem formulation between competitor deployment owners, which are each assumed to select a deployment location for providing user access.

Figure 3

**Description**

Field of the invention

This invention relates to a game theoretic system, method and computer program for recommending a deployment strategy for providing user access to a wireless network. The network comprises a plurality of broadband connection or access point devices shared among users of the wireless network, and a set of deployment locations which can be served to provide user access to the respective wireless network. The deployment strategy is obtained by solving a game theoretic problem formulation between competitor deployment owners.

Background of the invention

Citywide wireless access networks have been advanced by two recent market trends: wireless technologies available at home and the concept of broadband sharing based on network virtualization. This means that the footprint of public wireless infrastructure may grow significantly when a percentage of the households open up their connections to third-party users. The deployment of this type of virtual access overlay (which in some aspects is similar to a mobile virtual network operator) on top of an existing network should follow a roll out strategy due to the following reasons: the available budget is limited and reaching the critical mass (available public hotspots) while covering high demand areas has priority.

The deployment of citywide WiFi networks hardened by the idea of broadband sharing has become a hot topic in the last years. Due to the many initiatives in this market, the planning of such networks has started to be a short term question for operators. Plenty research has been done on cellular network planning, but the deployment of a sharing overlays on top of existing broadband access network has differences such as scalability and loose control on network nodes. For a city deployment, instead of hundreds of nodes (as in a cellular network) a WiFi overlay may have tens of thousands of nodes. Moreover, routers are placed at the customers' premises and the control shared between the owner and the operator. This causes new challenges when planning this type of networks.

The present inventors have tackled the problem of planning metropolitan WiFi networks using different approaches. A solution based on a budgeted version of the Set Covering Problem is described in (C. Thraves, G. Urueta, P. Vidales, and M. Solarski. Driving the Deployment of Citywide Ubiquitous Wifi Access, Proceedings of First International Conference on Simulation Tools and Techniques for Communications, Networks and Systems (SIMUTOOLS 2008) industry track (SIMULWORKS 2008), March 2008). In (L. E. Agustin-Blas, S. Salcedo-Sanz, P. Vidales, G. Urueta, A. Portilla-Figueras, and M. Solarski. A Hybrid Grouping Genetic Algorithm for Citywide Ubiquitous WiFi Access Deployment, Proceedings of the IEEE Congress on Evolutionary Computation, May 2009.) an approach supported on genetic algorithms is described and the results show that better results can be obtained when using such method.

Solving other aspects, the document (N. Sastry, J. Crowcroft, and K. Sollins. Architecting Citywide Ubiquitous Wi-Fi Access, Proceedings of the 6th Workshop on Hot Topics in Networks (HotNets-VI), November 2007.) presents a mechanism to enable safe WiFi sharing with legitimate guests. The authors describe how to architect a citywide cooperative network based on secure tunneling of the data and discuss some security concerns related to this type of deployments.

In EP2043305 a solution for load balancing among IEEE 802.11 access points making a part of a broadband sharing network system is described. The document depicts the scenario where home broadband connections are shared with third party users.

In CN101296190 game theory methods are applied for cooperative communication in a wireless self-organized network. The method optimizes data transmission quality and node energy consumption by the game behavior of a sending node and a trunk. The game theory methods are used for cooperative communication in a deployed sensor wireless network and a scenario is assumed to be formed by a sensor network.

In view of the above, it is an object of the present invention to provide an improved system, method and computer program for recommending a deployment strategy for providing user access to a wireless network.

Summary of the invention

The object of the present invention is achieved by the subject-matter of the attached claims.

In preferred embodiments, the present invention provides a system and method to derive deployment strategies for metropolitan wireless networks. The present invention works on a scenario where home broadband connections are shared with third party users and generates alternative deployment strategies based on game theoretic methods.

Such a solution according to the present invention may in preferred embodiments be used to derive strategies which are applicable by network operators to deploy metropolitan wireless networks based on sharing private Internet broadband connections installed a priori in the customer premises. For example, at least a subset of these broadband connections or access points can be shared among the household members and other distinct user connected to the access point; therefore sharing the Internet broadband access. In this embodiment, these access points are the possible deployment locations and can be regarded as the input subset for the method.

In contrast to the method described in CN101296190 the present invention uses game theory to generate alternative deployment strategies for a wireless network. Moreover, in a preferred embodiment, the present invention works on the principle of broadband sharing where broadband connections at houses are shared with other users, forming a virtual access overlay. According to the present invention, game theory can be applied to formulate deployment games, which an operator can use to plan the roll out of such citywide wireless networks. Preferred embodiments of the invention relate to a system or method to derive deployment strategies based on two types of games: a zero-sum game and fictitious play. While the zero-sum formulation can provide a baseline model, the fictitious play can illustrate a learning game.

In a preferred embodiment, a method of the present invention takes this input subset of possible deployment locations and applies two different games to derive a strategy that can be utilized to conduct the roll out of metropolitan wireless networks. It is also preferred to visualize the output strategies in a geographical information system, for example such to analyze characteristics of the metropolitan wireless network generated, such as coverage, offered capacity and fulfilled demand.

One aspect of the invention relates to a method for recommending a deployment strategy for a deployment owner providing access to a wireless network. The deployment owner may for example be a network access provider or a Internet Service Provider (ISP). The network comprises a plurality of broadband connection or access point devices shared among users of the wireless network. Further, the wireless network comprises a set of deployment locations, wherein each deployment location can be served by a corresponding subset of the broadband connection or access point devices to provide user access to the wireless network with a profit consequence for the deployment owner corresponding to each respective deployment location. The method according to the present invention comprises the steps of

- estimating based on the profits of each of said deployment locations, the corresponding payoff induced for possible combinations of selecting a deployment location for providing user access to the wireless network when a competitor deployment owner is assumed to select the same or a different deployment location for providing user access as well,
- defining a game theoretic problem formulation using said estimated payoff,
- solving the game theoretic problem formulation and recommending a deployment strategy which corresponds to the solution of the game theoretic problem formulation.

In a preferred embodiment, the solution of said game theoretic formulation is obtained by maximizing the worst-case possible payoff, wherein the worst-case possible payoff corresponds with the said competitor selecting a deployment strategy maximizing his worst-case possible payoff.

It is also preferred that the step of defining the game theoretic formulation comprises the step of generating a payoff-game-matrix $M_A$, wherein selecting a first index in a first dimension of the payoff-game-matrix corresponds to selecting a deployment location for providing user access to the wireless network, and wherein selecting a second index in a second dimension of the payoff-game-matrix corresponds to the competitor deployment owner selecting a deployment location for providing user access.

Preferably, the entries of the payoff-game-matrix $M_A$ each correspond with the profit gained by selecting a deployment location subtracted with the profit gained by the competitor when he selects a deployment location, wherein preferably each of the respective profits accounts for the installation and operation cost of selecting a respective deployment location.

The solution of the game theoretic formulation is preferably obtained by solving a zero-sum game, preferably a zero-sum matrix game comprising dual programming problems.

It is also preferred that the estimation of the payoff which is based on the identified profits of each of said deployment locations comprises the step of observing the selections made by the competitor for generating and using historical averages or empirical frequencies of the observed selections.

It is further preferred that the step of generating the historical averages or empirical frequencies comprises an iterative learning step.

In a preferred embodiment, the step of using the historical averages or empirical frequencies comprises the step of defining the game theoretic formulation to be a stochastic fictitious game, wherein the step of selecting the deployment locations comprises the step of calculating probabilistic strategies, wherein the probabilistic strategies correspond to a probabilistic distribution of possible selections of deployment locations.

It is also preferred that the calculation of the probabilistic strategies comprises an optimization step, wherein the optimized strategy maximizes a utility function having a randomization factor for accounting for mixed-strategies in the competitor's selections in the game theoretic formulation.

Another aspect of the present invention relates to a computer program performing the steps of any of the methods described above.

A further aspect of the present invention relates to digital storage medium containing such a computer program.

Yet another aspect of the present invention relates to a system for performing the steps according to any of the methods described above, comprising:

- a deployment location database containing information about the profit of providing user access to the wireless network for each of said deployment locations;
- an estimation means for estimating based on the profits of each of said deployment locations, the corresponding payoff induced for each possible combination of selecting a deployment location for providing user access to the wireless network, when a competitor deployment owner is assumed to select the same or a different deployment location for providing user access as well;
- game theoretic formulation definition means for defining a theoretic formulation using said estimated payoff,
- a game decision module for solving the game theoretic formulation and for recommending a deployment strategy corresponding to the solution of said game theoretic formulation.

In a preferred embodiment of the invention, the game decision module is a zero-sum or fictitious play decision module.

It is also preferred that the wireless network is a metropolitan wireless network, wherein further preferred the said broadband connection or access point devices shared among users of the wireless network are installed in household premises, and even further preferred separate private network channels for use in the household are provided.

Preferably, the broadband connection or access point devices allow connection using the IEEE 802.11 standard and are preferably Wi-Fi devices.

The deployment location database preferably contains information about customer demand in each deployment location.

A preferred embodiment of the invention comprises observation means for observing and storing information about the selections of deployment locations made by the competitor in a database.

Yet another preferred embodiment of the present invention comprises a visualization interface for conveying information about the recommended deployment strategy in a visualized manner to a human.

Brief description of the drawings

Preferred embodiments of the invention are described in more detail below with reference to the attached drawings, which are by way of example only. It is shown in

Fig. 1 a communication network for sharing broadband Internet connection access;

Fig. 2 a scenario of a potential metropolitan wireless network build by sharing the Internet broadband connection installed a priori in the customer premises;

Fig. 3 a preferred embodiment of a system that relates to the present invention. This system receives input data, performs method steps and outputs the resulting corresponding strategy in a visual form, in accordance with the present invention;

Fig. 4 shows a preferred embodiment of the method according to the invention implemented based on zero-sum game, to derive deployment strategies for metropolitan WiFi networks based on sharing the Internet broadband access;

Fig. 5 shows another preferred embodiment of the method according to the present invention implemented based on ficticious play game, to derive deployment strategies for metropolitan WiFi networks based on sharing the Internet broadband access.

Detailed description of preferred embodiments

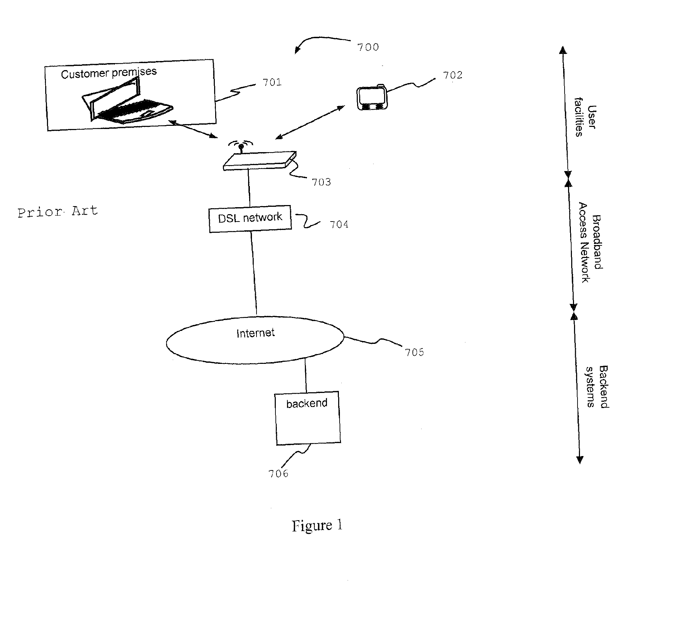

Figure 1 depicts a broadband sharing platform that opens the fixed broadband infrastructure through virtualization of the terminal equipment and enables home users to share the available broadband connection in a controlled and secure way (700). In a particular implementation, the connection is leased by a broadband customer (701), and the access to the Internet is granted to third parties using a broadband modem, which is required to offer a WiFi interface (703). In addition to the broadband customer, the wireless interface can also be accessed by anybody who can attach their WiFi-compliant terminal (702) to the access point (703). Figure 1 shows a high level architecture for the described solution. All traffic from private and public customers goes through the DSL network (704) and connects to a backend system (706) via the Internet (705). The backend system is operated by an Internet Service Provider (ISP).

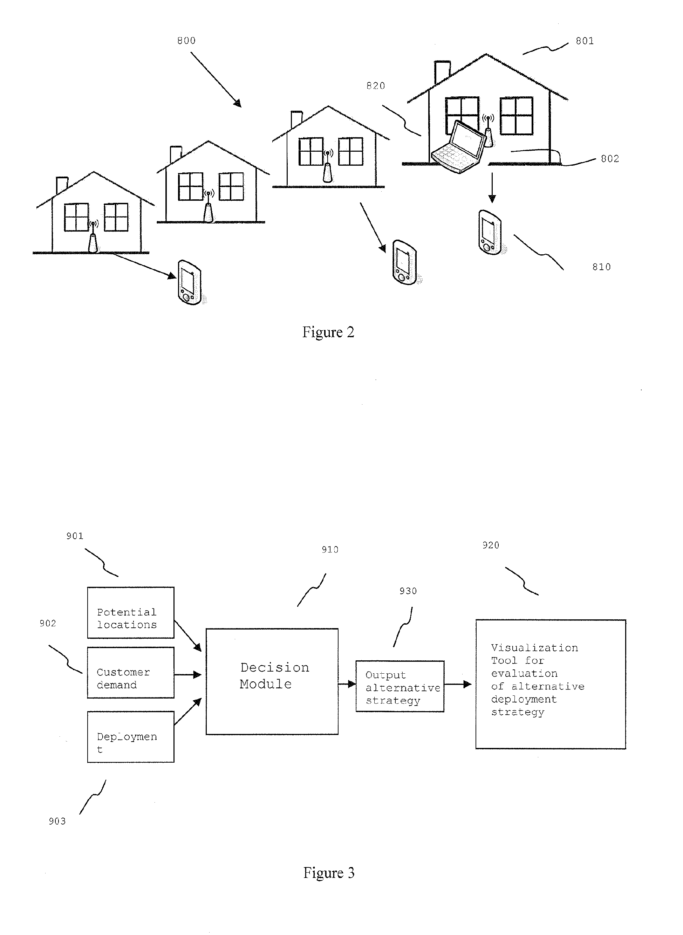

Accordingly, based on this solution to share broadband connections, a potential scenario to apply the present invention is depicted in Figure 2. The scenario comprises a set of installed broadband connections (800) located in the customer premises, wherein at least a subset of these connections can be accessed by the users in the household that connect to the WiFi router using a WiFi enabled device (820) and other wireless users connected to the access point (802), using for example an IEEE 802.11 enabled mobile device (810).

To deploy metropolitan WiFi networks for public wireless access to the Internet, based on this scenario (Figure 2), planning is needed. A subset of broadband connections needs to be selected and then the solution for broadband sharing should be deployed at these locations. This represents costs for the operator and therefore renders a cost effective deployment strategy useful.

According to a preferred embodiment of the present invention, a system generates deployment strategies for the operator to build its metropolitan WiFi networks using the principle of broadband sharing in combination with game theory.

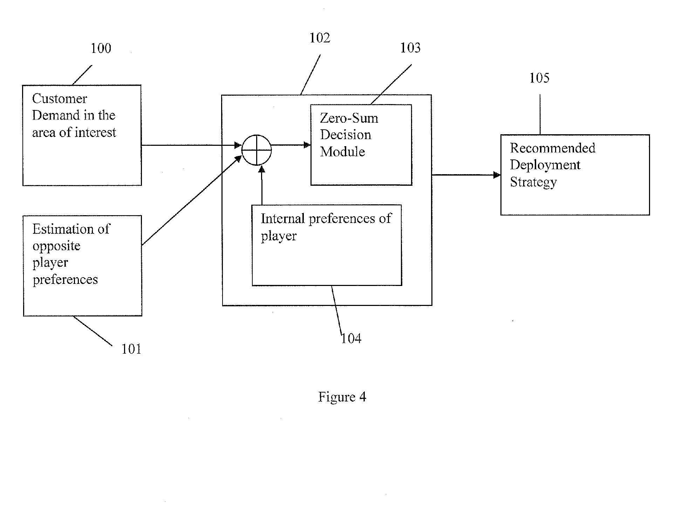

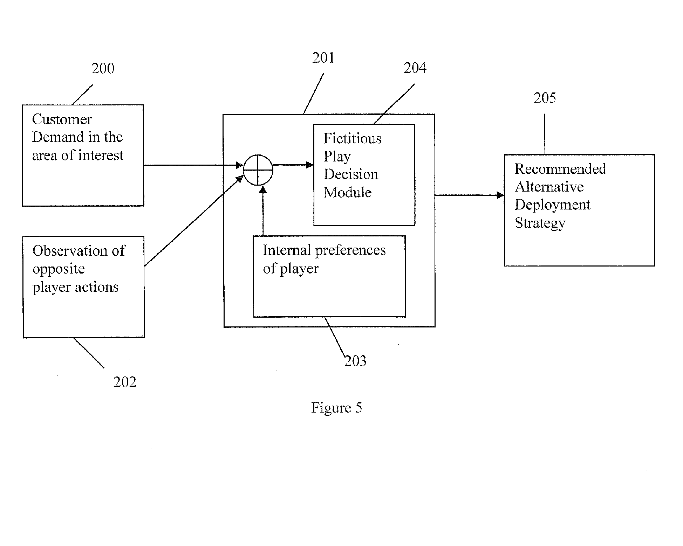

In a preferred embodiment, the system receives input data containing the location of the total set of potential broadband locations available, the deployment cost related to a particular location and the customer demand on that particular place. This information is applied in the methods depicted in Figures 4 and 5.

It is also preferred that the output of the methods depicted in Figure 4 and 5 is visualized using a visualization interface that is part of the system.

Figure 3 depicts a preferred system according to the present invention. This preferred system uses as input three sources of information: (901) location of all potential broadband connections wherein access may be shared between households and third party users, (902) customer demand at these locations, (903) deployment cost for each location. The last data may be equal for all locations in an exemplary case.

These three sources of information (901, 902, and 903) are input into the Decision Module (910) that derives alternative deployment strategies based on game theory. The function and structure of further preferred Decision Modules (910) is shown in and described with reference to Figures 4 and 5, respectively.

The output (930) of the Decision Module (910) is an alternative decision strategy that can preferably be visualized, e.g. for analysis, in a Visualization tool (920) based on geographical information. In a preferred embodiment of the invention, the deployment is visualized on maps, showing the selected locations for deployment and the impact of this deployment on the customer demand associated to the locations.

In preferred embodiments of the present invention, the system can utilize two separate methods to derive the deployment strategies for metropolitan wireless networks based on game theory, which relates to multi-person decision making problems.

Figure 4 depicts the deployment strategy being derived and recommended according to an embodiment of the present invention, wherein for a player, for example a company competing against another one for wireless deployment in a metropolitan area, a special kind of game called zero-sum game is solved.

The customer demand in the area of interest or deployment 100 and estimation of opposite player preferences 101 constitute inputs to the decision system 102 which combines these with the internal preferences 104 of the player, i.e. company. This combination provides the parameters of the zero-sum game utilized in computation at the zero-sum decision module 103. The output of the decision module, hence the decision system 102, is the recommended deployment strategy 105 derived in accordance with the present invention.

Figure 5 depicts a deployment strategy being derived and recommended according to an embodiment of the present invention, wherein for a player, for example a company competing against another one for wireless deployment in a metropolitan area, a special kind of game solution method called fictitious play is used.

The customer demand in the area of interest or deployment 200 is one of the inputs to the alternative decision system 201. Another input is obtained by observing opposite player actions 202. These two inputs are added to the internal preferences of the player, i.e. company, 203. The combined information provides parameters of the fictitious play decision module 204 utilized in deriving the alternative recommended deployment strategy 205 in accordance with the present invention.

Preferably, the deployment strategy computation method shown in Figure 4 is used if a good estimate of opposite player preferences 101 is available. If the estimate is not available, then it is preferred to use the alternative approach shown in Figure 5, which utilizes observation of opposite player actions 202.

In preferred embodiments of the invention, a game matrix is used to define the respective game theoretic problem formulation. Players typically follow the demand in the sense that they will try to get the most popular sites in terms of wireless access. Therefore, it is preferred that the first step in the creation of the game matrix is to determine the associated demand for all locations. For this purpose, we have for example generated 3 demand matrices that can be used for generating the game matrix for preferred embodiments of the invention. In this example, real information from the collocated operational cellular network was used to calculate the demand. The dataset includes the location of a subset of cellular base stations in a city area and their aggregated data traffic (total amount per cell in kbps) for uplink and downlink. This data was collected during a period of 30 days.

Each demand matrix has different granularity: (1) total demand per cellular based station or per cell, (2) total demand per zipcode, and (3) total demand per city area, where city area is defined as a collection of DSL locations, randomly selected, within a particular zipcode. These 3 grouping methods resulted in 23, 81, 194 potential deployment locations, respectively.

Once the potential deployment sites and their demand is known, the game matrix, $M_A$, is generated. For each location, the entry $M_A(i, j)$ represents the payoff or loss that results from calculating the total profit at location i, j, selected by Player 1 and subtracting the profit of location k, l, chosen by Player 2.

$$M_A(i,j) = P(i,j) - P(k,l), \text{where } i \neq k \text{ and } j \neq l \qquad (1)$$

It is assumed in this embodiment that both players have the same profile, meaning same cost and revenue models, in which profit per user $P_u$ is defined as difference between revenues R and cost C per user. Thus, C includes the installation (CAPEX) and operation (OPEX) costs, and revenue R comes from router sale price plus access revenues from nomadic users.

For each location the total demand (data traffic) is divided by the average demand per user (in this case, 200 Kbps per user) and the resulting number of users is then multiplied by the function Pu=C-R. Thus, the profit at location i,j is P(i,j) = users * Pu .

The next sections explain how the generated game matrix can be used for zero-sum games and fictitious play, wherein the above real dataset and model is used to apply these two types of games and to derive the respective deployment strategies.

A zero-sum deployment strategy game can be formulated for city WiFi networks, such to model duopolistic competition between two companies (players). In this example, the game matrix (cost and payoffs) is assumed to be known to both players of the game. Since the game is defined as zero-sum, the attacker's gain is equal to the defender's loss, and vice verse. The zero-sum game has the payoff matrix defined above. Here, Player 1 is the maximize (row player) and the Player 2 is the minimizer (column player) of the game.

Such two player zero-sum matrix game can admit a solution in mixed strategies and the solution (saddle point) can be obtained by solving the following pair of primal-dual linear programming problems:

$$\max_x \quad v$$

$$\text{s.t.} \quad \sum_i P(i,j)x_i \geq v, \ \forall j \in \mathcal{N}_r$$
$$\sum_i x_i = 1, \ x_i \geq 0, \ \forall i \in \mathcal{N}_r \qquad (2)$$

and

$$\min_y \quad w$$

$$\text{s.t.} \quad \sum_j P(i,j)y_j \geq w, \ \forall i \in \mathcal{N}_r$$
$$\sum_i y_i = 1, \ y_i \geq 0, \ \forall j \in \mathcal{N}_r \qquad (3)$$

Since both problems are feasible and mutually dual, by duality theory, the maximum of *v* will be equal to the minimum of *w.* Hence, the value *v=w* is the value of the game, which corresponds to the equilibrium (saddle point) gain and loss for Players 1 and 2, respectively. The vector *x* represents the equilibrium deployment strategy of Player 1 whereas the vector *y* is the respective deployment strategy of Player 2.

In the deployment game described above, the assumption is made that the both players have complete knowledge of the payoff matrix (in the zero-sum game formulation). Next, a fictitious play mechanism is described, where players know only their own payoff, but not that of their opponents. In fictitious play, game players repeatedly use strategies that are typically best responses to the historical averages, or empirical frequencies, of opponents which they observe. If the empirical frequencies of players converge (under some conditions), then it implies a convergence of strategies to a Nash equilibrium.

Fictitious play is one of many possible learning schemes, where players observe actions of and learn more about their opponent at each iteration of the game. In the following, a discrete and stochastic variant of fictitious play is described. Thus, an evolutionary version of the game is defined in which the strategies at a given time instance are selected in response to the entire prior history of the opponent's actions. Furthermore, due to its stochastic nature, this exemplary game rewards randomization, thereby imposing so-called mixed strategies. This feature is especially relevant to game theoretic problem formulations where players have an incentive to confuse others and look unpredictable by randomly varying their actions.

Stochastic fictitious play solves the following static deployment game iteratively without requiring the players to know their opponents' payoff. Each player (e.g. Player 1 or Player 2) selects a probabilistic strategy $x_i = [x_i(1), \ldots, x_i(N)]$, i = 1, 2, such that $\sum_j x_i(j) = 1$ and $0 \leq x_i(j) \leq 1$, and receives a reward according to the utility function $U_i(x_1, x_2)$ defined as

$$U_1(x_1, x_2) = x_1^T P_1 x_2 - \tau x_1^T \log(x_1)$$
$$U_2(x_1, x_2) = x_2^T P_2 x_1 - \tau x_2^T \log(x_2), \qquad (4)$$

where $\tau > 0$ is the randomization factor and the matrices $P_i$ are of fixed size (here 121X121). Here, we adopt a different notation for convenience and denote the strategies of the players as $x_1 = x$ and $x_2 = y$, instead of *x* and *y* of zero-sum and fuzzy games.

At each step of the game, player *i* selects an action $a_i$ according to respective probability distribution (strategy) $x_i$. The best response mapping $b_i$, which determines the current strategy $x_i$, is chosen to maximize the player utility provided in Eq.(4) and is defined as

$$\beta_i(x_1, x_2) := \arg\max_{x_i} U_i(x_1, x_2) = \sigma\left(\frac{P_i x_{-i}}{\tau}\right), \quad i = 1, 2, \qquad (5)$$

where $x_{-i}$ is the strategy of the other player, and $\sigma(\cdot)$ is the logit or soft-max function. The ith element of the soft-max function is

$$(\sigma(x))_i := \frac{e^{x(i)}}{\sum_j e^{x(j)}}.$$

In discrete-time fictitious play, each player then computes the empirical frequency of the opponent at each time step k of the game, for example by using the equation

$$q_i(k+1) = q_i(k) + \frac{1}{k+1}(v_{a_i} - q_i(k)),$$

where $v_{ai}$ is a vector whose $i^{th}$ term equals 1 in accordance with the observed action $a_i$ and the remaining equal to 0. Subsequently, the players update their strategy according to the optimal response to the running average of the opponent's actions, i.e.

$$x_i(k) = \beta_i(q_{-i}(k)),$$

where $b_i$ is defined in Eq. (5).

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems defined in the claims and the equivalents thereof.

## Claims

1. A method for recommending a deployment strategy for a deployment owner providing access to a wireless network, wherein the network comprises a plurality of broadband connection or access point devices shared among users of the wireless network, wherein the wireless network comprises a set of deployment locations, wherein each deployment location can be served by a corresponding subset of the broadband connection or access point devices to provide user access to the wireless network with a profit consequence for the deployment owner corresponding to each respective deployment location, the method comprising the steps of

   - estimating based on the profits of each of said deployment locations, the corresponding payoff induced for possible combinations of selecting a deployment location for providing user access to the wireless network when a competitor deployment owner is assumed to select the same or a different deployment location for providing user access as well,
   - defining a game theoretic problem formulation using said estimated payoff,
   - solving the game theoretic problem formulation and recommending a deployment strategy which corresponds to the solution of the game theoretic problem formulation.

2. The method according to claim 1, wherein the solution of said game theoretic formulation is obtained by maximizing the worst-case possible payoff, wherein the worst-case possible payoff corresponds with the said competitor selecting a deployment strategy maximizing his worst-case possible payoff.

3. The method according to claim 1 or 2, wherein said step of defining the game theoretic formulation comprises the step of generating a payoff-game-matrix $M_A$, wherein selecting a first index in a first dimension of the payoff-game-matrix corresponds to selecting a deployment location for providing user access to the wireless network, and wherein selecting a second index in a second dimension of the payoff-game-matrix corresponds to the competitor deployment owner selecting a deployment location for providing user access.

4. The method of claim 3, wherein the entries of the payoff-game-matrix $M_A$ each correspond with the profit gained by selecting a deployment location subtracted with the profit gained by the competitor when he selects a deployment location, wherein preferably each of the respective profits accounts for the installation and operation cost of selecting a respective deployment location.

5. The method of any of the preceding claims, wherein said solution of the game theoretic formulation is obtained by solving a zero-sum game, preferably a zero-sum matrix game comprising dual programming problems.

6. The method according to claim 1 or 2, wherein estimating the payoff based on the identified profits of each of said deployment locations comprises the step of observing the selections made by the competitor for generating and using historical averages or empirical frequencies of the observed selections.

7. The method according to claim 6, wherein the step of generating the historical averages or empirical frequencies comprises an iterative learning step.

8. The method according to claim 6 or 7, wherein the step of using the historical averages or empirical frequencies comprises the step of defining the game theoretic formulation to be a stochastic fictitious game, wherein the step of selecting the deployment locations comprises the step of calculating probabilistic strategies, wherein the probabilistic strategies correspond to a probabilistic distribution of possible selections of deployment locations.

9. The method according to claim 8, wherein the calculation of the probabilistic strategies comprises an optimization step, wherein the optimized strategy maximizes a utility function having a randomization factor for accounting for mixed-strategies in the competitor's selections in the game theoretic formulation.

10. A computer program performing the steps of the method according to any of the preceding claims.

11. A digital storage medium containing the computer program of claim 10.

12. A system performing the steps according to any of the method claims 1 to 9, comprising:

- a deployment location database containing information about the profit of providing user access to the wireless network for each of said deployment locations;
- an estimation means for estimating based on the profits of each of said deployment locations, the corresponding payoff induced for each possible combination of selecting a deployment location for providing user access to the wireless network, when a competitor deployment owner is assumed to select the same or a different deployment location for providing user access as well;
- game theoretic formulation definition means for defining a theoretic formulation using said estimated payoff,
- a game decision module for solving the game theoretic formulation and for recommending a deployment strategy corresponding to the solution of said game theoretic formulation.

13. The system according to claim 12, wherein the game decision module is a zero-sum or fictitious play decision module.

14. The system according to claim 12 or 13, wherein the wireless network is a metropolitan wireless network, wherein preferably the said broadband connection or access point devices shared among users of the wireless network are installed in household premises, and further preferred provide separate private network channels for use in the household.

15. The system according to claim 14, wherein said broadband connection or access point devices allow connection using the IEEE 802.11 standard and are preferably Wi-Fi devices.

16. The system according to any of claims 12 to 15, wherein the deployment location database contains information about customer demand in each deployment location.

17. The system according to any of claims 12 to 16, further comprising observation means for observing and storing information about the selections of deployment locations made by the competitor in a database.

18. The system according to any of claims 12 to 17, further comprising a visualization interface for conveying information about the recommended deployment strategy in a visualized manner to a human.

700

Customer premises

701

702

Prior Art

703

DSL network    704

Internet    705

backend

706

User facilities

Broadband Access Network

Backend systems

Figure 1

800

801

820

802

810

Figure 2

901

910

920

902

930

| Potential locations |
| Customer demand |
| Deployment |

Decision Module

Output alternative strategy

Visualization Tool for evaluation of alternative deployment strategy

903

Figure 3

100

Customer
Demand in the
area of interest

Estimation of
opposite
player
preferences

101

102

103

Zero-Sum
Decision
Module

Internal preferences of
player

104

105

Recommended
Deployment
Strategy

Figure 4

200

201

204

205

Customer
Demand in the
area of interest

Fictitious
Play
Decision
Module

Recommended
Alternative
Deployment
Strategy

Observation of
opposite
player actions

Internal preferences
of player

203

202

Figure 5

**DECLARATION**

Application Number

which under Rule 63 of the European Patent Convention EP 09 16 9830
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV. H04W16/18 |

Statement in accordance with the Notice from the European Patent Office dated 1 October 2007 concerning business methods(OJ 11/2007; p592f) (EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01) , pages 592-593, XP007905525 ISSN: 0170-9291):The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention.Claim 1 describes a method optimizing profit estimation by solving a game theoretic problem. The claimed method can fully be performed without using technical means. It does not result in a technical effect as the goal of the method is to increase payoff. Claim 12 defines a system comprising standard technical features such as a database, module and means, which do not lend technical character to the claimed subject-matter. The only identifiable technical aspects of

-/--

| Place of search | Date | Examiner |
|---|---|---|
| The Hague | 15 March 2010 | Weinmiller, Jost |

EPO FORM 1504 (P04F37)

Europäisches
Patentamt

European
Patent Office

Office européen
des brevets

# DECLARATION

**Application Number**

which under Rule 63 of the European Patent Convention EP 09 16 9830
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|

Reason:

the claimed invention relate to the use of
conventional, general-purpose data
processing technology for processing data
of an inherently non-technical nature. The
information technology employed is
considered to have been generally known as
it was widely available to everyone at the
date of filing/priority of the present
application. The notoriety of such prior
art cannot reasonably be contested. No
documentary evidence is therefore
considered necessary.  The applicant's
attention is drawn to the fact that a
search may be carried out during
examination following a declaration of no
search under Rule 63 EPC, should the
problems which led to the declaration
being issued be overcome (see EPC
Guideline C-VI, 8.2).

| Place of search | Date | Examiner |
|---|---|---|
| The Hague | 15 March 2010 | Weinmiller, Jost |

EPO FORM 1504 (P04F37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2043305 A

- CN 101296190

**Non-patent literature cited in the description**

- **C. Thraves ; G. Urueta ; P. Vidales ; M. Solarski.** Driving the Deployment of Citywide Ubiquitous Wifi Access. *Proceedings of First International Conference on Simulation Tools and Techniques for Communications, Networks and Systems (SIMUTOOLS 2008) industry track (SIMULWORKS 2008),* March 2008

- **L. E. Agustin-Blas ; S. Salcedo-Sanz ; P. Vidales ; G. Urueta ; A. Portilla-Figueras ; M. Solarski.** A Hybrid Grouping Genetic Algorithm for Citywide Ubiquitous WiFi Access Deployment. *Proceedings of the IEEE Congress on Evolutionary Computation,* May 2009

- **N. Sastry ; J. Crowcroft ; K. Sollins.** Architecting Citywide Ubiquitous Wi-Fi Access. *Proceedings of the 6th Workshop on Hot Topics in Networks (Hot-Nets-VI),* November 2007